# EUROPÄISCHE PATENTSCHRIFT

(11) **EP 3 156 833 B1**
(45) Veröffentlichungstag und Bekanntmachung des Hinweises auf die Patenterteilung: **01.05.2019**
(21) Anmeldenummer: 16002191.1
(22) Anmeldetag: 12.10.2016
(51) Int. Cl.: G02B 6/44

(54) **ZUGENTLASTUNGSLASCHE**
STRAIN-RELIEF HANGER
BRIDE DE DÉCHARGE DE TRACTION

(30) Priorität: 17.10.2015 DE 102015013464
(43) Veröffentlichungstag der Anmeldung: 19.04.2017
(73) Patentinhaber: Langmatz GmbH, 82467 Garmisch-Partenkirchen (DE)
(72) Erfinder: Bruweleit, Stefan, 82377 Penzberg (DE)
(74) Vertreter: Flosdorff, Jürgen

(56) Entgegenhaltungen:
- WO-A1-2013/150051
- DE-U1-202006 017 299
- DE-U1-202011 105 708
- US-A- 5 410 828
- US-A1- 2010 314 506

## Beschreibung

Die Erfindung betrifft eine Zugentlastungslasche, mit der ein Micropipe oder dergleichen in einer Zugrichtung an einem Gegenstand fixierbar ist, während das Micropipe in der anderen Richtung bewegbar bleibt. Die Zugentlastungslasche ist zu demselben Zweck auch für andere röhrchenförmige oder kabelartige Gegenstände verwendbar.

Nachfolgend wird die Erfindung im Zusammenhang mit einem Glasfasernetz-Verteilerschrank beschrieben, bei dem eine große Anzahl von Micropipes, beispielsweise 90 Stück, von unten durch ein gelochtes oder mit Schlitzen versehenes Bodenblech ins Innere des Verteilerschranks eingeführt werden, um darin in vorbestimmten Bahnen geführt und fixiert zu werden. Wenn z.B. durch Erdarbeiten Zugkräfte auf die Micropipes ausgeübt werden, würde hierdurch die Anordnung der Micropipes in dem Verteilerschrank verändert oder zerstört, wenn die Zugkräfte nicht blockiert würden. Hierzu bietet es sich an, die Micropipes so im Bereich ihrer Einführung in den Verteilerschrank zu fixieren, dass sie nicht aus dem Verteilerschrank herausziehbar sind. Andererseits ist es häufig erforderlich, die Micropipes um eine zusätzliche Länge in den Verteilerschrank einzuführen, was dann den Montageaufwand beträchtlich erhöht, wenn die Fixierung der bereits eingeführten Micropipes am Bodenblech mit einem Werkzeug gelöst werden muss, wie dies beispielsweise erforderlich wäre, wenn sie mit Hilfe von Schrauben und Schellen fixiert wären.

Die DE 20 2006 017 299 U1 offenbart eine Zugabfangvorrichtung einer Lichtwellenverteilereinrichtung mit wenigstens einer Zugentlastungslasche, die geeignet ist, ein Micropipe oder dergleichen zu fixieren, wobei die Zugentlastungslasche einen ersten Abschnitt mit einer Öffnung durch die das Micropipe durchführbar ist, und einen in einem Winkel abgebogenen zweiten Abschnitt aufweist. Das Micropipe wird durch Anziehen einer Klemmschraube fixiert, so dass es in beiden Richtungen unbeweglich ist.

Auch die DE 20 2011 105 708 U1 offenbart Zugabfangvorrichtungen für Lichtleitkabel, die ein Micropipe oder dergleichen so fixieren, da es sowohl in einer Zugrichtung als auch in der entgegen gesetzten Richtung unbeweglich ist.

Der vorliegenden Erfindung liegt die Aufgabe zugrunde, für das obige Problem eine bessere Lösung anzugeben.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht eine Zugentlastungslasche vor, die einen ersten Abschnitt mit einem Loch und einen in einem Winkel abgebogenen zweiten Abschnitt ausweist. Das Loch hat einen scharfkantigen Rand oder scharfkantige Randabschnitte. Durch dieses Loch ist das Micropipe durchführbar, und zwar bevorzugt mit geringem Spiel.

Die Ausbildung ist so getroffen, dass bei Einwirken einer Zugkraft auf das Micropipe in der einen Zugrichtung, in der die Bewegung des Micropipe blockiert werden soll, durch das Micropipe eine Kippbewegung der Zugentlastungslasche um eine Randkante des zweiten Abschnitts hervorgerufen wird, die sich an einem feststehenden Gegenstand abstützt, wodurch sich das Micropipe fest in dem Loch verkantet und durch dessen scharfkantigen Rand sicher gehalten ist. Damit ist das Micropipe in der einen Richtung, in der die Zugkraft ausgeübt wird, fixiert, in dem sich die Zugentlastungslasche an dem feststehenden Gegenstand, in dem oben erwähnten Anwendungsfall auf der Oberseite des Bodenblechs, abstützt.

In der entgegengesetzten Richtung bleibt das Micropipe hingegen frei beweglich, so dass es ungehindert durch die Zugentlastungslasche in dieser entgegengesetzten Richtung bewegt werden kann. Im Anwendungsfall eines Glasfaser-Netzverteilerschranks kann somit das Micropipe um eine gewünschte Zusatzlänge von dem Bodenblech nach oben gezogen werden, wobei die Zugentlastungslasche bei ausreichendem Spiel in dem Loch selbst tätig wieder zu dem Bodenblech herabgleiten kann.

Damit ermöglicht es die erfindungsgemäße Zugentlastungslasche, ohne Verwendung eines Werkzeugs und mit einem minimalen Arbeitsaufwand des Monteurs ein Micropipe oder einen anderen langgestreckten röhrchenförmigen Körper in einer Zugrichtung an einem feststehenden Gegenstand zu blockieren und in der anderen Richtung frei beweglich zu halten.

Der Winkel zwischen den beiden Abschnitten der Zugentlastungslasche sollte größer als 90 Grad sein, damit die die Blockierung des Micropipe hervorrufende Kippbewegung zuverlässig erfolgt, jedoch kann auch ein Winkel von 90 Grad oder weniger als 90° dieselbe Wirkung hervorrufen, wenn das seitliche Spiel des Micropipe in dem Loch sehr gering ist.

Das Loch in dem ersten Abschnitt der Zugentlastungslasche kann eine beliebige Form haben. Bevorzugt ist das Loch kreisrund, oval oder mehreckig. Das Loch muss senkrecht zur Biege- bzw. Knicklinie zwischen den beiden Abschnitten eine Breite haben, die nur geringfügig größer als der Außendurchmesser des Micropipes ist. Wichtig ist, dass die Zugentlastungslasche gegenüber dem Micropipe eine Kippbewegung ausführen kann, durch die die scharfen Randkanten des Lochs das Micropipe so ergreifen, dass dieses darin fixiert ist.

In weiteren Einzelheiten ist vorgesehen, dass die Zugentlastungslasche einstückig ausgebildet ist. Sie hat bevorzugt in dem Biege- oder Knickbereich wenigstens eine Aussparung, so dass sie leicht gebogen bzw. geknickt werden kann, ohne dass der Rand des ausgestanzten Lochs hierdurch verformt wird.

Die Zugentlastungslasche besteht bevorzugt aus Metall wie Edelstahl. Bei der Anwendung in einem Glasfaser-Netzverteilerschrank hat das Stahlblech, aus dem die Zugentlastungslasche gebildet ist, eine Dicke von 1 - 2 mm, vorzugsweise etwa 1,5 mm.

Das freie Spiel zwischen dem Micropipe oder dergleichen und dem Rand des Lochs beträgt vorzugsweise mehrere Zehntelmillimeter.

Weitere Einzelheiten der Erfindung ergeben sich aus der nachfolgenden Beschreibung sowie anhand der Zeichnungen. Dabei zeigen:
- Figur 1: eine perspektivische Ansicht einer Ausführungsform der Zugentlastungslasche;
- Figuren 2A - 2E: einen Vertikalschnitt, eine Aufsicht, eine andere perspektivische Ansicht, eine Rückansicht der Zugentlastungslasche sowie eine Aufsicht auf den ungebogenen Rohling;
- Figuren 3 - 5: aufeinanderfolgende Zustände im Bereich des Bodenblechs eines Glasfasernetz-Verteilerschranks;
- Figur 6: ein schematischer Längsschnitt durch Figur 5.

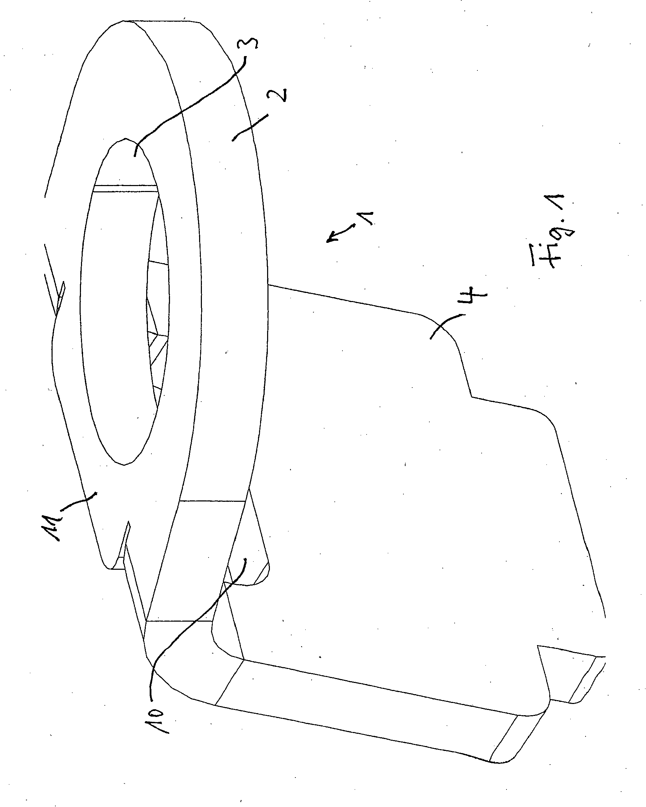

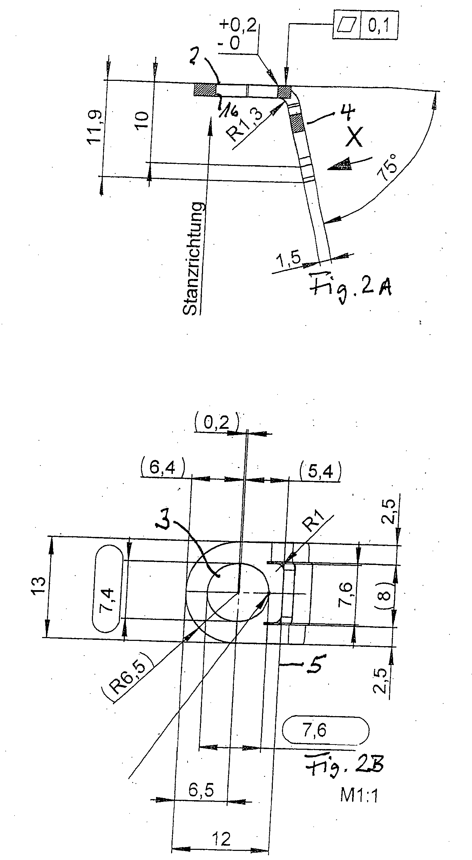

Figur 1 zeigt eine Zugentlastungslasche 1, die einen ersten Abschnitt 2 mit einem Loch 3 und einen durch einen Biegevorgang abgewinkelten zweiten Abschnitt 4 aufweist. Nähere Einzelheiten sind in den Figuren 2A bis 2E dargestellt.

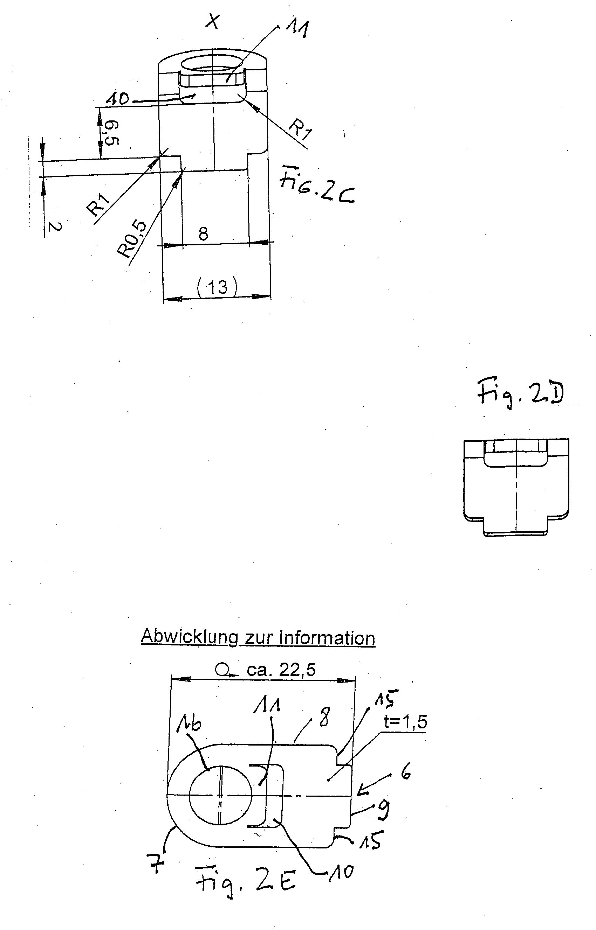

Der Winkel zwischen dem ersten Abschnitt 2 und dem zweiten Abschnitt 4 beträgt 105°, wie Figur 2A zeigt. Das Loch 3 ist ein Langloch, dessen Durchmesser in Richtung des zweiten Abschnitts 4 7,6 mm beträgt, während der Durchmesser in hierzu senkrechter Richtung 7,4 mm misst. Das zugehörige Micropipe (in Figur 2 nicht dargestellt) hat einen Außendurchmesser von 7,0 mm, sodass dessen freies Spiel in dem Loch senkrecht zur Biege- bzw. Knicklinie 5 etwas größer ist als in der hierzu senkrechten Richtung.

Die Zugentlastungslasche 1 ist aus einem Stahlblech 6 gebildet, das in Figur 2E in einer Aufsicht dargestellt ist. Die Außenkontur ist durch einen Halbkreis 7 gebildet, der in einem rechteckigen Abschnitt 8 mit einem Ansatz 9 übergeht. Aus dem rechteckigen Abschnitt ist ein in Querrichtung verlaufendes Fenster 10 ausgeschnitten, durch das ein Biegevorgang möglich ist, bei dem der Rand des Lochs einschließlich eines seitlich freigeschnittenes Abschnitts 11 eben bleibt.

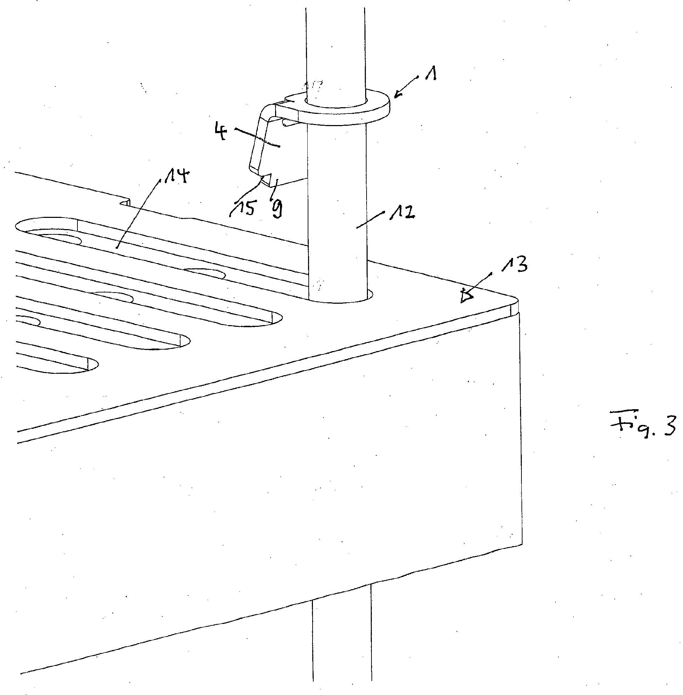

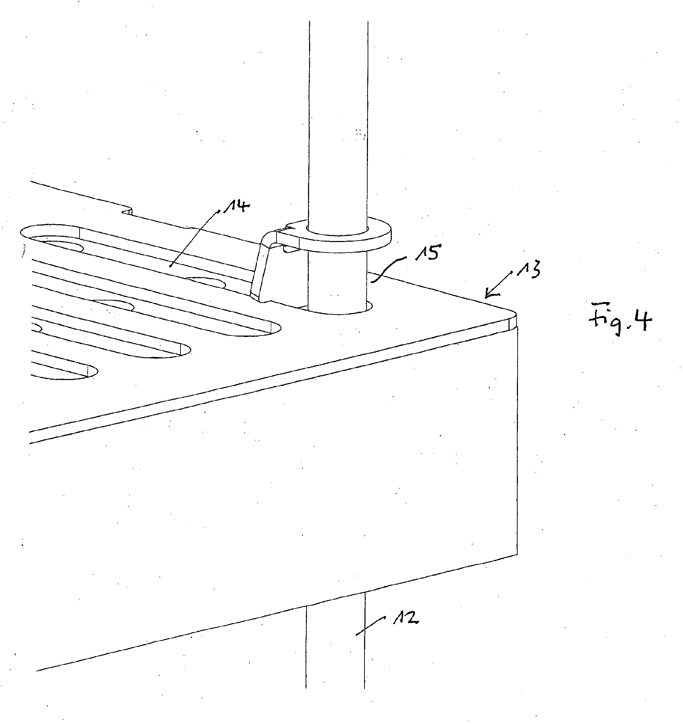

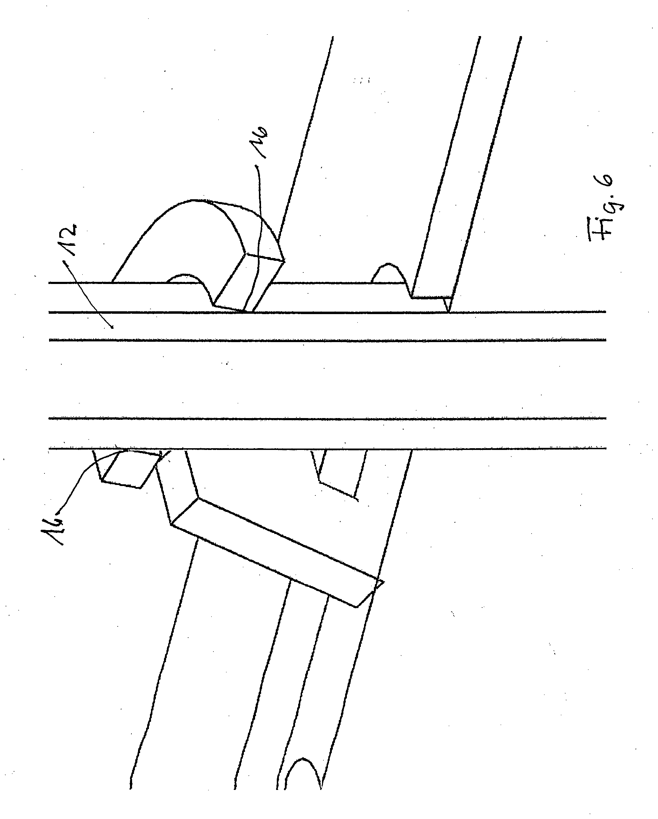

Die Figuren 3 bis 6 zeigen die Anwendung der erfindungsgemäßen Zugentlastungslasche 1 auf ein Micropipe 12, das von unten durch ein isoliert dargestelltes Bodenblech 13 durch einen Schlitz 14 in einen nicht dargestellten Verteilerschrank eingeführt wird. In der Darstellung der Figur 3 sitzt die Zugentlastungslasche 1 auf dem Micropipe 12 und rutscht selbsttätig (oder unter Beihilfe durch einen Monteur) in die in Figur 4 dargestellte Lage. Hierbei greift der etwa rechteckige Ansatz 9 an der unteren Randkante des Abschnitts 4 in Querrichtung in den Schlitz 14 ein. Die beiden seitlichen Schultern 15 neben dem Ansatz 9 liegen auf der Oberseite 15 des Bodenblechs 13 auf.

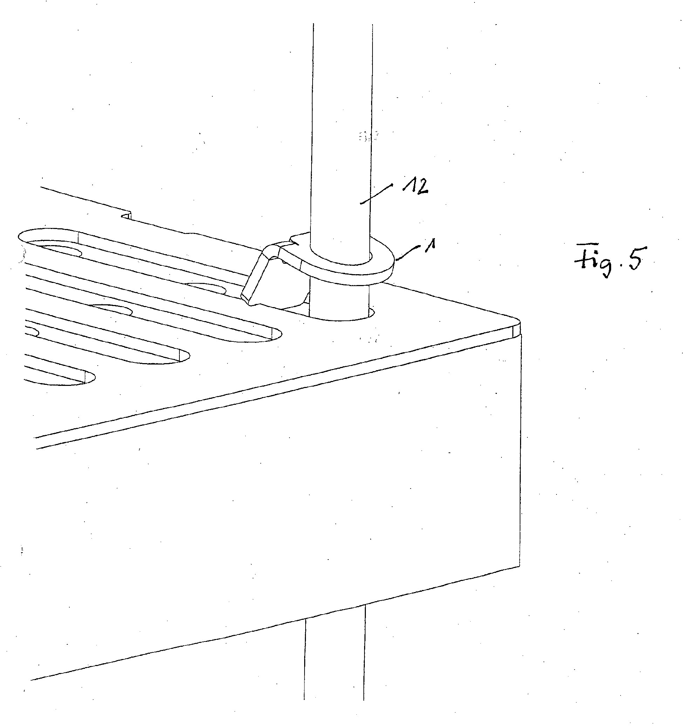

Figur 5 zeigt den Zustand, in dem eine nach unten wirkende Zugkraft auf das Micropipe 12 ausgeübt wird. Da das Loch 3 einen scharfkantigen Rand 16 hat, verhakt sich der Rand 16 des Lochs 3 am Umfang des Micropipe 12 und erzwingt eine Kippbewegung der gesamten Zugentlastungslasche durch die von der Lochwand 16 auf das Micropipe 12 ausgeübte Haltekraft, so dass das Micropipe sicher durch die Zugentlastungslasche 1 in Zugrichtung blockiert ist. In der Gegenrichtung bleibt das Micropipe 12 hingegen frei beweglich, so dass eine zusätzliche Länge des Micropipe in den Verteilerschrank eingezogen werden kann.

## Patentansprüche

1. Zugentlastungslasche (1), die geeignet ist, ein Micropipe (12) oder dergleichen in einer Zugrichtung zu fixieren,
wobei die Zugentlastungslasche (1) einen ersten Abschnitt (2) mit einem Loch (3), durch das das Micropipe (12) durchführbar ist, und einen in einem Winkel abgebogenen zweiten Abschnitt (4) aufweist,
**dadurch gekennzeichnet,**
**dass** das Micropipe (12) in der der Zugrichtung gegengesetzten Richtung frei bewegbar bleibt,
wobei das Loch (3) einen scharfkantigen Rand (16) hat,
und wobei bei Einwirken einer Zugkraft durch das Micropipe (12) in der einen Zugrichtung die Zugentlastungslasche (1) eine Kippbewegung um eine Randkante (15) des zweiten Abschnitts (4) ausführt, wodurch das Micropipe (12) fest in dem Loch (3) fixiert ist, indem der scharfkantige Rand (16) des Lochs (3) das Micropipe (12) bei der Kippbewegung ergreift.

2. Zugentlastungslasche nach Anspruch 1,
**dadurch gekennzeichnet,**
**dass** der Winkel zwischen den Abschnitten ≥ 90° ist.

3. Zugentlastungslasche nach Anspruch 1 oder 2,
**dadurch gekennzeichnet,**
**dass** die Zugentlastungslasche (1) einstückig ausgebildet ist.

4. Zugentlastungslasche nach einem der Ansprüche 1 bis 3,
**dadurch gekennzeichnet,**
**dass** die Zugentlastungslasche (1) in einem Biege- oder Knickbereich zwischen dem ersten Abschnitt (2) und dem zweiten Abschnitt (4) wenigstens eine Aussparung (10) aufweist.

5. Zugentlastungslasche nach einem der Ansprüche 1 bis 4,
**dadurch gekennzeichnet,**
**dass** das Loch (3) senkrecht zur Biege- bzw. Knicklinie (5) eine Breite hat, die geringfügig größer als der Außendurchmesser des Micropipes (12) ist.

6. Zugentlastungslasche nach einem der Ansprüche 1 bis 5,
**dadurch gekennzeichnet,**
**dass** das Loch (3) kreisrund, oval oder mehreckig ist.

7. Zugentlastungslasche nach einem der Ansprüche 1 bis 6,
**dadurch gekennzeichnet,**
**dass** die Zugentlastungslasche (1) aus einem Blech mit einer Dicke von 1 - 2 mm, vorzugsweise etwa 1,5 mm gebildet ist.

8. Glasfasernetz-Verteilerschrank, mit einem mit Schlitzen oder Durchgangsbohrungen versehenen Boden, durch die von unten Micropipes ins Innere des Glasfasernetz-Verteilerschranks einführbar sind,
**dadurch gekennzeichnet,**
**dass** auf den Micropipes (12) oberhalb des Bodens (13) jeweils eine Zugentlastungslasche (1) gemäß den Ansprüchen 1 bis 7 sitzt, durch die die Micropipes (12) in dem Glasfasernetz-Verteilerschrank zugentlastet werden.

9. Verfahren zur Zugentlastung einer Micropipe (12) in einem Glasfasernetz-Verteilerschrank mit einer mit Schlitzen (14) oder Durchgangsbohrungen versehenen Lochwand (16) als Boden mittels einer Zugentlastungslasche (1) gemäß den Ansprüchen 1 bis 7,
wobei der scharfkantige Rand (16) des Lochs (3) sich beim Ausüben einer Zugkraft in Zugrichtung am äußeren Umfang des Micropipe (12) verhakt und somit eine Kippbewegung um die Randkante (15) am zweiten Abschnitt (4) der Zugentlastungslasche (1) durch die von der Lochwand (16) auf das Micropipe (12) ausgeübte Haltekraft erzwingt, so dass das Micropipe sicher durch die Zugentlastungslasche (1) in Zugrichtung blockiert ist und
wobei das Micropipe (12) beim Ausüben einer Zugkraft entgegengesetzt der Zugrichtung frei beweglich ist, so dass eine zusätzliche Länge des Micropipe (12) in den Glasfaser-Verteilerschrank eingezogen wird.

## Claims

1. A strain relief hanger (1), which is suitable for fixing a micropipe (12) or the like in position in a tensional direction, wherein the strain relief hanger (1) has a first section (2) with a hole (3), through which the micropipe (12) may be passed, and a second section (4) bent away at an angle, **characterised in that** the pipe (12) remains freely movable in the direction opposite to the tensional direction, wherein the hole (3) has a sharp edged margin (16) and wherein, when a tensional force acts through the micropipe (12) in the one tensional direction the strain relief hanger (1) performs a tilting movement about a marginal edge (15) of the second section (4), whereby the micropipe (12) is firmly fixed in position in the hole (3) by the sharp edged margin (6) of the hole (3) gripping the micropipe (12) when the tilting movement occurs.

2. A strain relief hanger as claimed in Claim 1, **characterised in that** the angle between the sections is ≥ 90°.

3. A strain relief hanger as claimed in Claim 1 or 2, **characterised in that** the strain relief hanger (1) is of one-piece construction.

4. A strain relief hanger as claimed in one of Claims 1 to 3, **characterised in that** the strain relief hanger (1) includes at least one opening (10) in a bend or kink region between the first section (2) and the second section (4).

5. A strain relief hanger as claimed in one of Claims 1 to 4, **characterised in that** the hole (3) has a breadth perpendicular to the bend or kink line (5) which is slightly larger than the external diameter of the micropipe (12).

6. A strain relief hanger as claimed in one of Claims 1 to 5, **characterised in that** the hole (3) is circular, oval or polygonal.

7. A strain relief hanger as claimed in one of Claims 1 to 6, **characterised in that** the strain relief hanger (1) is constituted by a metal plate with a thickness of 1 - 2 mm, preferably about 1.5 mm.

8. An optical fibre network distribution cabinet with a base provided with slots or through bores, through which micropipes may be introduced from below into the interior of the optical fibre network distribution cabinet, **characterised in that** situated on the micropipes (12) above the base (13) there is a respective strain relief hanger (1) as claimed in Claims 1 to 7, by which the micropipes (12) are strain relieved in the optical fibre network distribution cabinet.

9. A method of strain relieving a micropipe (12) in an optical fibre network distribution cabinet with an apertured wall (16) provided with slots (14) or through bores constituting a base by means of a strain relief hanger (1) as claimed in Claims 1 to 7, wherein the sharp edged margin (16) of the hole (3) interlocks with the outer periphery of the micropipe (12) when a tensional force is exerted in a tensional direction and thus forces a tilting movement about the marginal edge (15) on the second section (4) of the strain relief hanger as a result of the retaining force exerted by the apertured wall (16) on the micropipe (12) so that the micropipe is reliably locked by the strain relief hanger (1) in the tensional direction and wherein the micropipe (12) is freely movable when a tensional force is exerted opposite to the tensional direction so that an additional length of the micropipe (12) is drawn into the optical fibre distribution cabinet.

## Revendications

1. Bride de décharge de traction (1), qui est adaptée pour fixer un micro-conduit (12) ou similaire dans une direction de traction,
dans laquelle la bride de décharge de traction (1) présente une première section (2) avec un trou (3), par lequel le micro-conduit (12) peut passer, et une deuxième section (4) coudée selon un angle,
**caractérisée en ce**
**que** le micro-conduit (12) reste librement mobile dans la direction opposée à la direction de traction,
dans laquelle le trou (3) a un bord coupant (16),
et dans laquelle sous l'action d'une force de traction par le micro-conduit (12) dans l'une direction de traction, la bride de décharge de traction (1) effectue un mouvement de basculement autour d'une arête de bord (15) de la deuxième section (4), moyennant quoi le micro-conduit (12) est fixé solidement dans le trou (3), par le fait que le bord coupant (16) du trou (3) saisit le micro-conduit (12) lors du mouvement de basculement.

2. Bride de décharge de traction selon la revendication 1,
**caractérisée en ce**
**que** l'angle entre les sections est ≥ 90°.

3. Bride de décharge de traction selon la revendication 1 ou 2,
**caractérisée en ce**
**que** la bride de décharge de traction (1) est réalisée d'un seul tenant.

4. Bride de décharge de traction selon l'une quelconque des revendications 1 à 3,
**caractérisée en ce**
**que** la bride de décharge de traction (1) présente au moins un évidement (10) dans une zone de flexion ou de pli entre la première section (2) et la deuxième section (4).

5. Bride de décharge de traction selon l'une quelconque des revendications 1 à 4,
**caractérisée en ce**
**que** le trou (3) a perpendiculairement à la ligne de flexion ou de pli (5), une largeur qui est légèrement supérieure au diamètre extérieur du micro-conduit (12).

6. Bride de décharge de traction selon l'une quelconque des revendications 1 à 5,
**caractérisée en ce**
**que** le trou (3) est rond, ovale ou polygonal.

7. Bride de décharge de traction selon l'une quelconque des revendications 1 à 6,
**caractérisée en ce**
**que** la bride de décharge de traction (1) est formée à partir d'une tôle d'une épaisseur de 1 - 2 mm, de préférence d'environ 1,5 mm.

8. Armoire de distribution de réseau de fibre optique, avec un fond doté de fentes ou de perçages traversants, par lesquels des micro-conduits peuvent être introduits du bas vers l'intérieur de l'armoire de distribution de réseau de fibre optique,
**caractérisée en ce**
**que** respectivement une bride de décharge de traction (1) selon les revendications 1 à 7 se situe sur les micro-conduits (12) au-dessus du fond (13), par laquelle les micro-conduits (12) sont déchargés en traction dans l'armoire de distribution de réseau de fibre optique.

9. Procédé de décharge de traction d'un micro-conduit (12) dans une armoire de distribution de réseau de fibre optique avec une paroi perforée (16) dotée de fentes (14) ou de perçages traversants en tant que fond au moyen d'une bride de décharge de traction (1) selon les revendications 1 à 7,
dans laquelle le bord coupant (16) du trou (3) s'accroche lors de l'exercice d'une force de traction dans la direction de traction sur la périphérie extérieure du micro-conduit (12) et force ainsi un mouvement de basculement autour du bord d'arête (15) au niveau de la deuxième section (4) de la bride de décharge de traction (1) par la force de retenue exercée par la paroi perforée (16) sur le micro-conduit (12), de sorte que le micro-conduit est bloqué de manière sûre par la bride de décharge de traction (1) dans la direction de traction et
dans laquelle le micro-conduit (12) lors de l'exercice d'une force de traction opposée à la direction de traction est librement mobile, de sorte qu'une longueur supplémentaire du micro-conduit (12) est tirée dans l'armoire de distribution de réseau de fibre optique.
